(19) Europäisches Patentamt
European Patent Office
Office européen des brevets

(11) **EP 2 488 381 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.08.2016   Patentblatt 2016/33**

(45) Hinweis auf die Patenterteilung:
**05.06.2013   Patentblatt 2013/23**

(21) Anmeldenummer: **10741986.3**

(22) Anmeldetag: **12.08.2010**

(51) Int Cl.:
*B60K 6/485* (2007.10)          *B60W 10/06* (2006.01)
*B60W 20/00* (2016.01)          *B60W 30/18* (2012.01)
*F02N 11/08* (2006.01)

(86) Internationale Anmeldenummer:
**PCT/EP2010/061771**

(87) Internationale Veröffentlichungsnummer:
**WO 2011/045101 (21.04.2011 Gazette 2011/16)**

(54) **VERFAHREN ZUM BETREIBEN EINER ANTRIEBSVORRICHTUNG EINES KRAFTFAHRZEUGS SOWIE ANTRIEBSVORRICHTUNG FÜR EIN KRAFTFAHRZEUG**

METHOD FOR OPERATING A DRIVE DEVICE OF A MOTOR VEHICLE AND DRIVE DEVICE FOR A MOTOR VEHICLE

PROCÉDÉ POUR FAIRE FONCTIONNER UN DISPOSITIF D'ENTRAÎNEMENT D'UN VÉHICULE AUTOMOBILE ET DISPOSITIF D'ENTRAÎNEMENT POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.10.2009   DE 102009045567**

(43) Veröffentlichungstag der Anmeldung:
**22.08.2012   Patentblatt 2012/34**

(73) Patentinhaber: **Robert Bosch GmbH**
**70442 Stuttgart (DE)**

(72) Erfinder:
• **FALKENSTEIN, Jens-Werner**
**73434 Aalen (DE)**
• **HELLMANN, Manfred**
**71706 Hardthof (DE)**

(56) Entgegenhaltungen:
EP-A1- 1 283 357          WO-A1-2006/033612
DE-A1- 10 041 789        US-A- 5 927 415
US-A1- 2001 025 220      US-A1- 2002 161 507
US-A1- 2005 211 479      US-B1- 6 199 001

EP 2 488 381 B2

**Beschreibung**

Die Erfindung betrifft ein Verfahren zum Betreiben einer Antriebsvorrichtung eines Kraftfahrzeugs, die wenigstens eine Brennkraftmaschine und mindestens eine elektrische Maschine umfasst, wobei ein Fahrwiderstand, insbesondere eine Steigung, ermittelt und in Abhängigkeit davon die Antriebsvorrichtung betrieben wird.

Ferner betrifft die Erfindung eine Antriebsvorrichtung für ein Kraftfahrzeug, insbesondere zur Durchführung des oben beschriebenen Verfahrens, die zumindest eine Brennkraftmaschine und mindestens eine elektrische Maschine umfasst, und eine Einrichtung zur Erfassung eines Fahrwiderstands, insbesondere einer Steigung aufweist.

Stand der Technik

Verfahren sowie Antriebsvorrichtungen der eingangs genannten Art sind aus dem Stand der Technik bekannt. Moderne Kraftfahrzeuge weisen vermehrt sogenannte Hybridantriebsvorrichtungen auf, denen neben einer Brennkraftmaschine auch zumindest eine elektrische Maschine zur Erbringung eines Antriebsdrehmoments zur Verfügung steht. Derartige Hybridantriebsvorrichtungen umfassen in der Regel die Möglichkeit, einen rein elektrischen Fahrbetrieb zu realisieren, bei welchem die Brennkraftmaschine ausgeschaltet ist, um Kraftstoff zu sparen und Schadstoffemissionen zu verringern. Fordert der Fahrer eines derartigen Kraftfahrzeugs ein Antriebsdrehmoment, das die elektrische Maschine allein nicht zur Verfügung stellen kann, wird die Brennkraftmaschine gestartet. Wird die Brennkraftmaschine mithilfe derselben elektrischen Maschine gestartet, die während des elektrischen Fahrens für den Vortrieb sorgt, so muss zum Starten der Brennkraftmaschine das dazu notwendige Drehmoment vorgehalten werden. Aus einer noch nicht veröffentlichten Patentanmeldung der Anmelderin ist es bekannt, eine aktuelle Steigung als Fahrwiderstand zu bestimmen, und in Abhängigkeit davon die Brennkraftmaschine zu starten. Kommt es während des elektrischen Fahrbetriebs zu einer Erhöhung von Fahrwiderständen, zum Beispiel durch Änderung der Fahrbahnsteigung oder auch durch Überfahren eines Randsteins, so steigt der Drehmomentbedarf, der zum Sicherstellen des Vortriebs notwendig ist, an. Dies kann durch den Fahrer durch eine entsprechende Betätigung eines Fahrpedals ausgeglichen werden, wodurch der Start der Brennkraftmaschine erfolgt. Jedoch vergeht eine Mindestzeit, bevor die Brennkraftmaschine gestartet ist und das volle Brennkraftmaschinen-Drehmoment zur Verfügung steht. Dies wirkt sich störend auf das Fahrgefühl aus. Je nach Ausbildung der Antriebsvorrichtung kann es dabei während des Starts der Brennkraftmaschine sogar zu einer Zugkraftunterbrechung kommen. Insbesondere bei Steigungen wirkt sich dies negativ auf den Fahrkomfort aus.

Aus der DE 100 41 789 A1 ist eine Vorichtung zur Steuerung eines Fahrzeugs bekannt, bei der in Abhängigkeit der Straßenbedingungen ein Brennkraftmaschine und deren Öldruckgenerator gesteuert wird.

Aus der US 5,927,415 ist eine Vorrichtung und ein Verfahren zur Steuerung eines Hybridfahrzeugs bekannt, bei der die zu erwartende Last am Hybridfahrzeug auf Basis der Überschreitung eines Schwellwerts durch die aktuellen Straßensteigung vorhergesagt wird.

Offenbarung der Erfindung

Das erfindungsgemäße Verfahren sieht vor, dass die Brennkraftmaschine in Abhängigkeit von einem zu erwartenden Fahrwiderstand betrieben wird, der in Abhängigkeit von einem aktuellen Fahrwiderstand bestimmt wird. Als bevorzugter Fahrwiderstand wird hierbei eine Steigung berücksichtigt, die ein die Antriebsvorrichtung aufweisendes Kraftfahrzeug überwinden beziehungsweise befahren soll. Somit findet neben der Bestimmung des aktuellen Fahrwiderstands außerdem eine Prädiktion statt, die Aufschluss über einen zu erwartenden Fahrwiderstand gibt. Durch Kenntnis des zu erwartenden Fahrwiderstands lässt sich die Brennkraftmaschine der Antriebsvorrichtung bereits starten, bevor ihr Drehmoment benötigt wird. Dadurch kann der Start der Brennkraftmaschine in Situationen bezie ziehungs Momenten, in denen hohe Antriebsdrehmomente erforderlich sind, vermieden werden. Mittels des bestimmten zu erwartenden Fahrwiderstands kann darüber hinaus ein Stopp der Brennkraftmaschine verhindert werden, sodass ein voraussichtlich erfolgender Startvorgang der Brennkraftmaschine erst gar nicht notwendig wird. Bevorzugt wird zur Erfassung der aktuellen Steigung ein Neigungssensor verwendet. Zusätzlich dazu werden vorteilhafterweise Daten von einem Navigationssystem des Kraftfahrzeugs verwendet. Moderne Navigationssysteme ermöglichen neben einer zweidimensionalen Darstellung beziehungsweise Berechnung einer Fahrroute auch die Berücksichtigung von Höhenangaben und damit von auftretenden Steigungen. Durch Berücksichtigung der Daten des Navigationssystems kann bereits weit vorausschauend eine entsprechende Strategie angewandt werden, die ein Starten der Brennkraftmaschine in einem für den Fahrbetrieb nicht störenden Moment erfolgt.

Erfindungsgemäß wird zum Bestimmen des zu erwartenden Fahrwiderstands eine aktuelle Fahrwiderstandsänderung berücksichtigt. Hierzu wird die zeitliche Veränderung des aktuellen Fahrwiderstands erfasst beziehungsweise bestimmt. Die zeitliche Änderung lässt eine Abschätzung über den zukünftigen beziehungsweise zu erwartenden Fahrwiderstand zu. Besonders bevorzugt wird zur Bestimmung des zu erwartenden Fahrwiderstands der aktuelle Fahrwiderstand mit der aktuellen Fahrwiderstandsänderung extrapoliert. Die hierdurch erzeugte Kennlinie ergibt auf einfache Art und Weise Aufschluss über den zu erwartenden Fahrwiderstand.

Vorzugsweise wird bei Überschreiten eines vorgebbaren Schwellenwertes durch den bestimmten zu erwartenden Fahrwiderstand die Brennkraftmaschine gestartet. Überschreitet der zu erwartende Fahrwiderstand also den Schwellenwert, wird die Brennkraftmaschine bereits gestartet, bevor der aktuelle Fahrwiderstand den Schwellenwert erreicht, sodass eine sich auf den Fahrkomfort negativ auswirkende Verzögerung oder ein unangenehmes Ruckeln vermieden wird.

Ferner ist vorgesehen, dass bei der Bestimmung des zu erwartenden Fahrwiderstands zumindest ein Parameter für eine Gewichtung der aktuellen Fahrwiderstandsänderung berücksichtigt wird. Somit ist vorgesehen, dass die aktuelle Fahrwiderstandsänderung in Abhängigkeit von Rahmenbedingungen gewichtet wird.

Bevorzugt wird als Parameter zur Gewichtung die Fahrzeuggeschwindigkeit berücksichtigt. So wird der Parameter bevorzugt für niedrige Geschwindigkeiten, bei denen eine Zugkraftunterbrechung beim Start der Brennkraftmaschine besonders störend wirkt, größer gewählt, beziehungsweise größer gewichtet, als bei hohen Fahrzeuggeschwindigkeiten.

Alternativ oder zusätzlich wird als Parameter ein vorgebbarer (fester) Zeitwert für die Gewichtung berücksichtigt. Besonders bevorzugt wird der Zeitwert in Abhängigkeit von der Fahrzeuggeschwindigkeit, wie oben beschrieben, variiert.

Schließlich ist vorgesehen, dass der vorgebbare Schwellenwert in Abhängigkeit von einem aktuell möglichen Antriebsdrehmoment der elektrischen Maschine gewählt wird. Das aktuell mögliche Antriebsdrehmoment der elektrischen Maschine hängt insbesondere von der in einem ihr zugeordneten Energiespeicher gespeicherten Energie ab. Entlädt sich der Energiespeicher, so führt dies zu einer Verringerung des maximal möglichen Antriebsdrehmoments der elektrischen Maschine. Dadurch, dass der vorgebbare Schwellenwert in Abhängigkeit von dem aktuell möglichen, also dem maximal möglichen Antriebsdrehmoment gewählt wird, wird dieser Sachverhalt beziehungsweise der Ladezustand des elektrischen Speichers berücksichtigt. Hierdurch gewährleistet, dass auch bei einem teilweise entladenen Energiespeicher ein erhöhter Fahrwiderstand nicht zu Einbußen im Fahrkomfort führt. Alternativ kann der vorgebbare Schwellenwert auch direkt in Abhängigkeit vom Ladezustand des der elektrischen Maschine zugeordneten elektrischen Speichers gewählt werden.

Die erfindungsgemäße Antriebsvorrichtung zeichnet sich dadurch aus, dass die Einrichtung zur Erfassung eines Fahrwiderstands, insbesondere einer Steigung, in Abhängigkeit von einem aktuellen Fahrwiderstand einen zu erwartenden Fahrwiderstand bestimmt und in Abhängigkeit von dem zu erwartenden Fahrwiderstand die Brennkraftmaschine ansteuert, wobei zum Bestimmen des zu erwartenden Fahrwiderstands eine aktuelle Fahrwiderstandsänderung berücksichtigt. Zweckmäßigerweise ist die Einrichtung derart ausgebildet, dass sie ein Starten und/oder Stoppen der Brennkraftmaschine in Abhängigkeit des zu erwartenden Fahrwiderstands einleitet. Die Einrichtung kann dabei in Form eines Steuergerätes oder einer Steuergerät-Struktur vorliegen. So kann insbesondere im letzteren Fall die Einrichtung eine Fahrwiderstandserfassungseinrichtung sowie ein Steuergerät der Brennkraftmaschine umfassen, wobei die Fahrwidersandserfassungseinrichtung Signale an das Steuergerät der Brennkraftmaschine übermittelt, welches die Signale entweder zunächst auswertet und in Abhängigkeit davon die Brennkraftmaschine ansteuert oder durch die Signale direkt gesteuert wird.

Bevorzugt weist die Einrichtung, insbesondere die Fahrwiderstandserfassungseinrichtung, zumindest einen Neigungssensor auf. Mittels des Neigungssensors kann auf besonders einfache Art und Weise eine Steigung beziehungsweise Neigung einer Fahrbahn, auf der sich das die Antriebsvorrichtung aufweisende Kraftfahrzeug befindet, als Fahrwiderstand erfasst werden. Logischerweise wird hierbei die Steigung beziehungsweise Neigung der Fahrbahn in Fahrtrichtung des Kraftfahrzeugs betrachtet.

Schließlich ist vorgesehen, dass die Einrichtung Mittel zum Erfassen der aktuellen Fahrzeuggeschwindigkeit und/oder des aktuell möglichen Antriebsdrehmoments der elektrischen Maschine umfasst. Bei dem Mittel zur Erfassung des aktuell möglichen Antriebsdrehmoments der elektrischen Maschine handelt es sich bevorzugt um eine Schaltung und/oder Vorrichtung, die den Ladezustand eines der elektrischen Maschine zugeordneten Energiespeichers erfasst beziehungsweise bestimmt. Der Ladezustand des Energiespeichers wird als Grundlage für das mögliche, also das aktuell maximal mögliche Antriebsdrehmoment der elektrischen Maschine genutzt. Bei dem Mittel zum Erfassen der aktuellen Fahrzeuggeschwindigkeit handelt es sich bevorzugt um übliche Fahrzeuggeschwindigkeits-Sensoren. Bevorzugt ist die elektrische Maschine als Starter-Motor-Generator ausgebildet. Dadurch bildet die elektrische Maschine sowohl den Starter beziehungsweise Anlasser für die Brennkraftmaschine als auch eine generatorisch oder motorisch betreibbare elektrische Maschine, die zur Erbringung eines Antriebsdrehmoments für das Kraftfahrzeug oder zur Erzeugung elektrischer Energie genutzt werden kann.

Im Folgenden soll die Erfindung anhand der Zeichnung näher erläutert werden.

Dazu zeigen

Figur 1          eine Antriebsvorrichtung in einer vereinfachten Darstellung,

Figur 2          ein Ausführungsbeispiel eines vorteilhaften Verfahrens zum Betreiben der Antriebsvorrichtung und

Figuren 3A und B     zwei Ausführungsbeispiele von zu erwartenden Fahrwiderständen.

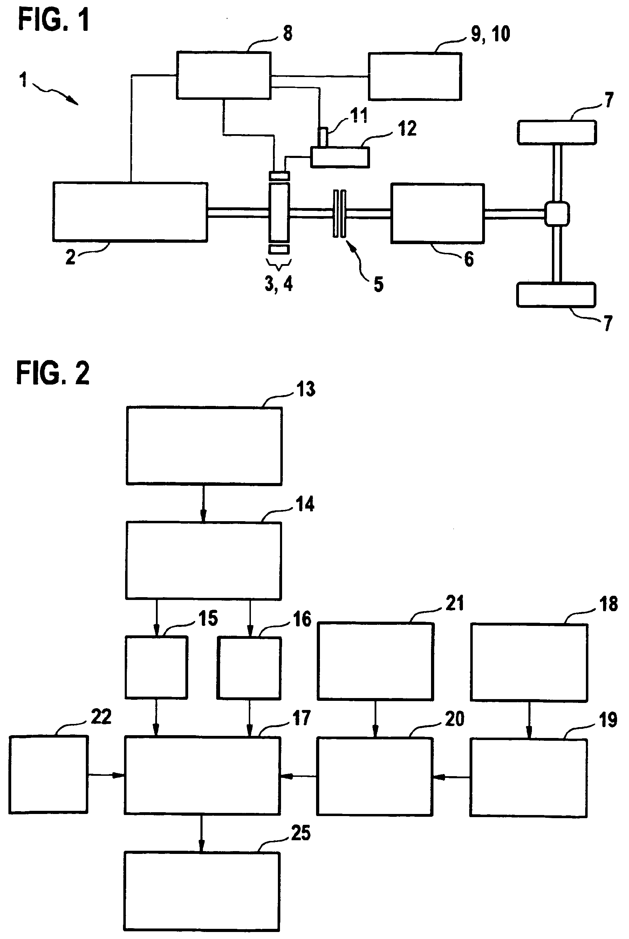

Die Figur 1 zeigt eine Antriebsvorrichtung 1 für ein Kraftfahrzeug in einer vereinfachten Darstellung. Die Antriebsvorrichtung 1 umfasst eine Brennkraftmaschine 2 sowie eine elektrische Maschine 3. Wobei die elektrische Maschine 3 als Starter-Motor-Generator 4 ausgebildet ist, und dazu mit ihrem Rotor drehfest mit der Kurbelwelle der Brennkraftmaschine 2 verbunden ist, sodass durch motorisches Betreiben der elektrischen Maschine 3 die Brennkraftmaschine 2 gestartet werden kann. Das von der Brennkraftmaschine 2 und/oder der elektrischen Maschine 3 erzeugte Antriebsdrehmoment kann durch Schließen einer Kupplung 5 auf ein Schaltgetriebe 6 übertragen werden, dessen Ausgangswelle mit Antriebsrädern 7 des Kraftfahrzeugs verbunden ist. Bei dem Schaltgetriebe 6 kann es sich sowohl um ein manuelles als auch um ein automatisches Schaltgetriebe handeln. Ebenso kann es sich dabei um ein Getriebe mit einer stufenlos verstellbaren Übersetzung handeln. Die Antriebsvorrichtung 1 umfasst ferner ein Steuergerät 8, das zur koordinierten Ansteuerung im Wesentlichen der Brennkraftmaschine 2 und der elektrischen Maschine 3 dient. Weiterhin ist das Steuergerät 8 mit einer Einrichtung 9 zur Erfassung eines Fahrwiderstands verbunden, die hierbei als Neigungssensor 10 ausgebildet ist. Schließlich ist das Steuergerät 8 mit einer Einrichtung 11 zur Erfassung des Ladezustands eines der elektrischen Maschine 3 zugeordneten wiederaufladbaren Energiespeichers 12 verbunden.

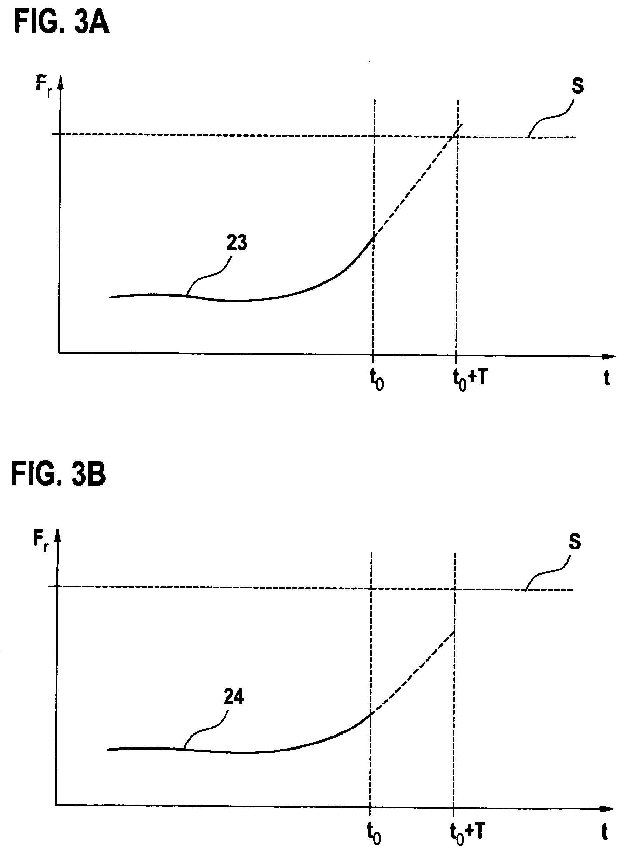

Anhand der Figuren 2, 3A und B soll nunmehr ein vorteilhaftes Verfahren zum Betreiben der Antriebsvorrichtung 1 beschrieben werden:

Zunächst wird in einem ersten Schritt 13 die Antriebsvorrichtung 1 des Kraftfahrzeugs in Betrieb genommen. In einem zweiten Schritt 14 wird zweckmäßigerweise in Abhängigkeit eines Fahrerwunschmoments bestimmt, welche der genannten Antriebsaggregate 2,3 wie genutzt werden sollen. Zunächst soll davon ausgegangen werden, dass nach dem Start der Antriebsvorrichtung 1 zunächst ein rein elektrischer Betrieb erfolgt, dass also ein Antriebsdrehmoment allein durch die elektrische Maschine 3 erbracht wird, während die Brennkraftmaschine 2 abgeschaltet und vorzugsweise von dem übrigen Antriebsstrang mittels einer weiteren, in Figur 1 nicht dargestellten Kupplung abgekuppelt ist. Dies kann beispielsweise dann der Fall sein, wenn der Ladezustand des Energiespeichers 12 oberhalb eines vorgebbaren Schwellenwerts liegt. Im rein elektrischen Betrieb wird ein Fahrerwunschdrehmoment allein durch die elektrische Maschine 3 umgesetzt. In den darauffolgenden Schritten 15 und 16 wird entsprechend der Betriebswahl sowie des Fahrerwunschmoments der Brennkraftmaschine 2 (Schritt 15) und der elektrischen Maschine 3 (Schritt 16) ein entsprechendes Antriebsdrehmoment vorgegeben.

In modernden Kraftfahrzeugen, bei denen die Brennkraftmaschine 2 zur Verminderung von Kraftstoffverbrauch und Emissionen abgestellt und zeitweise ein rein elektrischer Fahrbetrieb durchgeführt wird, kann in Situationen, in denen das Antriebsdrehmoment der elektrischen Maschine 3 nicht ausreicht, die Brennkraftmaschine 2 gestartet werden, um ihrerseits ein Antriebsdrehmoment zu erbringen. Erfolgt der Startvorgang der Brennkraftmaschine 2 durch die motorisch betriebene elektrische Maschine 3 beispielsweise während sich das Fahrzeug auf einer Steigung befindet, so kann dies insbesondere bei Doppelkupplungsgetrieben mit integrierter elektrischer Maschine zu einer Zugkraftunterbrechung und damit zu einem spürbaren und sich negativ auf den Fahrkomfort auswirkenden Ruckeln führen.

In einem folgenden Schritt 17, wird daher der Betrieb der Brennkraftmaschine 2 in Abhängigkeit von einem zu erwartenden Fahrwiderstand, insbesondere in Abhängigkeit von einer zu erwartenden Steigung gesteuert. Dabei gestaltet sich das Steuern des Betriebs der Brennkraftmaschine 2 im Wesentlichen dahingehend, dass die Brennkraftmaschine eingeschaltet oder ein Ausschalten der Brennkraftmaschine vermieden wird.

In dem vorliegenden Ausführungsbeispiel wird als Fahrwiderstand eine Steigung der Fahrbahn, auf der sich das Kraftfahrzeug befindet, wie zum Beispiel eine Parkhausauffahrt oder Ähnliches, berücksichtigt. Hierzu wird zunächst in einem weiteren Schritt 18 die aktuelle Steigung mittels des Neigungssensors 10 erfasst. In einem darauffolgenden Schritt 19 wird auf Basis der erfassten aktuellen Steigung eine aktuelle Steigungsänderung bestimmt. Aus der aktuellen Steigung und der aktuellen Steigungsänderung wird dann im folgenden Schritt 20 eine zu erwartende Steigung, also ein zu erwartender Fahrwiderstand, bestimmt. Dies kann unter Anwendung folgender Gleichungen erfolgen:

$$F_r(t_0+T) = F_r(t_0) + (dF_r/dt)^*T$$

Hierbei wird der aktuelle Fahrwiderstand durch $F_r(t_0)$ ausgedrückt und der zu erwartende, prädizierte Fahrwiderstand durch $F_r(t_0+ T)$, wobei $t_0$ den aktuellen Zeitpunkt darstellt, zu dem der zu erwartende Fahrwiderstand beziehungsweise die zu erwartende Steigung berechnet/bestimmt wird. Vorteilhafterweise wird die aktuelle Steigungsänderung, also allgemein die Fahrwiderstandsänderung, in Abhängigkeit von der aktuellen Fahrzeuggeschwindigkeit und/oder von einem vorgebbaren Zeitwert gewichtet. Der Wert T kann dazu eine feste, vorgebbare Zeitspanne sein, die situationsabhängig bestimmt beziehungsweise variiert wird. Wird der Wert T in Abhängigkeit der aktuellen Fahrzeuggeschwindigkeit bestimmt oder variiert, wird der Wert T bei niedrigen Fahrzeuggeschwindigkeiten, bei denen eine Zugkraftunterbrechung besonders störend wirkt, bevorzugt größer gewählt als bei hohen Fahrzeuggeschwindigkeiten. Hierzu wird zweckmäßigerweise in einem Schritt 21 die aktuelle Fahrzeuggeschwindigkeit erfasst.

In dem Schritt 17 wird der zu erwartende Fahrwiderstand mit einem vorgebbaren Schwellenwert S verglichen. Zweckmäßigerweise wird der Schwellenwert S in Abhängigkeit von einem aktuell möglichen Antriebsdrehmoment der elektrischen Maschine bestimmt. Hierzu wird bevorzugt der Ladezustand des Energiespeichers 12 mittels der Einrichtung 11 in einem Schritt 22 erfasst und in Abhängigkeit von dessen Ladezustand der Schwellenwert S bestimmt. Da die elektrische Maschine 3 bei einem vollgeladenen Energiespeicher 12 ein höheres Drehmoment über einen längeren Zeitraum erbringen kann, als bei einem entladenen Zustand des Energiespeichers 12, wird der Schwellenwert S mit abnehmendem Ladezustand des Energiespeichers 12 verringert.

Wird in dem Schritt 17 ein Überschreiten des Schwellenwerts durch den zu erwartenden Fahrwiderstand beziehungsweise die zu erwartende Steigung erfasst, so wird die Brennkraftmaschine 2 gestartet, bevor der aktuelle Fahrwiderstand dem zuvor bestimmten zu erwartenden Fahrwiderstand entspricht, sodass zu dem Zeitpunkt, in dem die Antriebsvorrichtung ein Gesamtantriebsdrehmoment zur Überwindung des zu erwartenden Fahrwiderstands erbringen muss, bereits das volle Antriebsdrehmoment der Brennkraftmaschine zur Verfügung steht und insbesondere eine Zugkraftunterbrechung in kritischen Situationen unterbleibt.

Die Figuren 3A und 3B zeigen dazu jeweils den Vergleich eines zu erwartenden Fahrwiderstands mit einem vorgegebenen Schwellenwert. Dazu ist jeweils eine Kennlinie 23 (Figur 3A) und eine Kennlinie 24 (Figur 3B) über die Zeit t aufgetragen, wobei die Kennlinien 23,24 jeweils ein Maß $F_r$ für den Fahrwiderstand (durchgezogene Linie) und für den zu erwartenden Fahrwiderstand (gestrichelte Linie) darstellen. In beiden Fällen wird zu einem Zeitpunkt $t_0$ der aktuelle Fahrwiderstand $F_r(t_0)$ sowie die aktuelle Fahrwiderstandsänderung ($dF_r/dt$) wie oben beschrieben bestimmt. Hieraus errechnet sich durch Extrapolation der zu erwartende Fahrwiderstand $F_r(t_0+T)$ zu einem Zeitpunkt $t_0+T$, wie durch eine gestrichelte Linie dargestellt. In dem ersten Fall gemäß Figur 3A schneidet die so erzeugte Kennlinie 23 den vorgebbaren Schwellenwert S, während die Kennlinie 24 zu dem Zeitpunkt $t_0+T$ noch unterhalb des Schwellenwerts S liegt. Dies liegt vorliegend daran, dass zu dem Zeitpunkt $t_0$ verschiedene aktuelle Fahrwiderstandsänderungen und somit unterschiedliche Steigungen der gestrichelten Linie vorliegen. Überschreitet der zu erwartende Fahrwiderstand $F_r(t_0+T)$ den Schwellenwert S, wie in Figur 3A dargestellt, so wird die Brennkraftmaschine zu dem Zeitpunkt $t_0$ in einem abschließenden Schritt 25, wie in der Figur 1 dargestellt, gestartet. Andernfalls, wenn also beispielsweise eine Situation gemäß Kennlinie 24 vorliegt, wird der rein elektrische Fahrbetrieb der Antriebsvorrichtung weitergeführt.

Wird das Kraftfahrzeug auf einer Strecke angehalten, deren zu erwartende Steigung den Schwellenwert überschreitet, so wird die Brennkraftmaschine 2 vorteilhafterweise nicht automatisch gestoppt, wie es zum Beispiel bei einer Fahrt auf der Ebene geschehen würde. Damit steht für eine Weiterfahrt sofort genügend Drehmoment zur Verfügung, sodass insbesondere ein Zurückrollen beim Starten auf der Steigung vermieden wird. Vorteilhafterweise wird das Verhalten der Antriebsvorrichtung im Stand durch den zu erwartenden Fahrwiderstand beeinflusst. Steht das Kraftfahrzeug beispielsweise an einer Steigung, deren Betrag den Schwellenwert S übersteigt, so wird die Brennkraftmaschine schon mit Herstellung der Fahrbereitschaft, also durch Starten der Antriebsvorrichtung 1 (Zündung an und gegebenenfalls Wählhebelposition D) gestartet. Mit diesen Maßnahmen steht einem Fahrer eines derartigen Kraftfahrzeugs das volle Antriebsdrehmoment der Brennkraftmaschine und der elektrischen Maschine direkt nach dem Start des Kraftfahrzeugs zur Verfügung.

Weiterhin kann die Prädiktion beziehungsweise Bestimmung des zu erwartenden Fahrwiderstands dazu genutzt werden, den Stopp der Brennkraftmaschine zu verhindern, sodass ein durch die Prädiktion vorhergesagter folgender Startvorgang der Brennkraftmaschine 2 erst gar nicht notwendig wird. Überschreitet der zu erwartende Fahrwiderstand $F_r(t_0+T)$ den vorgebbaren Schwellenwert S, so wird die laufende Brennkraftmaschine 2 zweckmäßigerweise nicht abgeschaltet. Es ist vorgesehen, dass in einem weiteren Ausführungsbeispiel der zu erwartende Fahrwiderstand stets bestimmt wird, unabhängig davon, ob die Brennkraftmaschine 2 läuft oder nicht.

Insgesamt werden hier somit ein Verfahren sowie eine Antriebsvorrichtung geboten, die auf einfache Art und Weise den Fahrkomfort durch Bestimmen des zu erwartenden Fahrwiderstands erhöhen.

**Patentansprüche**

1. Verfahren zum Betreiben einer Antriebsvorrichtung (1) eines Kraftfahrzeugs, die wenigstens eine Brennkraftmaschine (2) und mindestens eine elektrische Maschine (3) umfasst, wobei ein Fahrwiderstand, insbesondere eine Steigung, ermittelt und in Abhängigkeit davon die Brennkraftmaschine (2) betrieben wird, wobei die Brennkraftmaschine (2) in Abhängigkeit von einem zu erwartenden Fahrwiderstand ($F_r(t_0+T)$) betrieben wird, der in Abhängigkeit von einem aktuellen Fahrwiderstand ($F_r(t_0)$) bestimmt wird, **dadurch gekennzeichnet, dass** zum Bestimmen des zu erwartenden Fahrwiderstandes ($F_r(t_0+T)$) eine aktuelle Fahrwiderstandsänderung ($dF_r/dT$) berücksichtigt wird.

2. Verfahren nach Anspruch 1, **dadurch gekennzeichnet, dass** bei Überschreiten eines vorgebbaren Schwellenwertes (S) durch den bestimmten zu erwartenden Fahrwiderstand ($F_r(t_0+T)$) die Brennkraftmaschine (2) gestartet wird.

3. Verfahren nach einem der vorhergehenden Ansprüche, **dadurch gekennzeichnet, dass** bei der Bestimmung des zu erwartenden Fahrwiderstands ($F_r(t_0+T)$) zumindest ein Parameter für eine Gewichtung der aktuellen Fahrwiderstandsänderung ($dF_r/dT$) berücksichtigt wird.

4. Verfahren nach einem der vorhergehenden Ansprüche, **dadurch gekennzeichnet, dass** als Parameter die Fahrzeuggeschwindigkeit berücksichtigt wird.

5. Verfahren nach einem der vorhergehenden Ansprüche, **dadurch gekennzeichnet, dass** als Parameter ein vorgebbarer Zeitwert (T) berücksichtigt wird.

6. Verfahren nach einem der vorhergehenden Ansprüche, **dadurch gekennzeichnet, dass** der vorgebbare Schwellenwert (S) in Abhängigkeit von einem aktuell möglichen Antriebsdrehmoment der elektrischen Maschine (3) gewählt wird.

7. Antriebsvorrichtung (1) für ein Kraftfahrzeug, insbesondere zur Durchführung des Verfahrens nach einem oder mehreren der vorhergehenden Ansprüche, die zumindest eine Brennkraftmaschine (2) und mindestens eine elektrische Maschine (3) umfasst, und eine Einrichtung (9) zur Erfassung eines Fahrwiderstands, insbesondere einer Steigung, aufweist, **dadurch gekennzeichnet, dass** die Einrichtung (9) in Abhängigkeit von einem aktuellen Fahrwiderstand $F_r(t_0)$ einen zu erwartenden Fahrwiderstand ($F_r(t_0+T)$) bestimmt, wobei die Einrichtung zum Bestimmen des zu erwartenden Fahrwiderstandes ($F_r(t_0+T)$) eine aktuelle Fahrwiderstandsänderung ($dF_r/dT$) berücksichtigt, und in Abhängigkeit von dem zu erwartenden Fahrwiderstand ($F_r(t_0+T)$) die Brennkraftmaschine (3) ansteuert.

8. Antriebsvorrichtung nach Anspruch 7, **dadurch gekennzeichnet, dass** die Einrichtung (9) zumindest einen Neigungssensor (10) aufweist.

9. Antriebsvorrichtung nach einem der vorhergehenden Ansprüche, **dadurch gekennzeichnet, dass** die Einrichtung (9) Mittel zum Erfassen der aktuellen Fahrzeuggeschwindigkeit und/oder des aktuell möglichen Antriebsdrehmoments der elektrischen Maschine (3) umfasst.

**Claims**

1. Method for operating a drive device (1) of a motor vehicle, which drive device comprises at least one internal combustion engine (2) and at least one electric machine (3), wherein a driving resistance, in particular a positive gradient, is determined, and the internal combustion engine (2) is operated as a function thereof, wherein the internal combustion engine (2) is operated as a function of an expected driving resistance ($F_r(t_0+T)$) which is determined as a function of a current driving resistance ($F_r(t_0)$), **characterized in that** in order to determine the expected driving resistance ($F_r(t_0+T)$) a current change ($dF_r/dT$) in driving resistance is taken into account.

2. Method according to Claim 1, **characterized in that** when a predefinable threshold value (S) is exceeded by the determined expected driving resistance ($F_r(t_0+T)$) the internal combustion engine (2) is started.

3. Method according to one of the preceding claims, **characterized in that** at least one parameter for weighting the current change ($dF_r/dT$) in driving resistance is taken into account in the determination of the expected driving resistance ($F_r(t_0+T)$).

4. Method according to one of the preceding claims, **characterized in that** the speed of the vehicle is taken into account as a parameter.

5. Method according to one of the preceding claims, **characterized in that** a predefinable time value (T) is taken into account as a parameter.

6. Method according to one of the preceding claims, **characterized in that** the predefinable threshold value (S) is selected as a function of a current possible driving torque of the electric machine (3).

7. Drive device (1) for a motor vehicle, in particular for carrying out the method according to one or more of the preceding claims, which drive device comprises at least one internal combustion engine (2) and at least one electric machine (3), and has an apparatus (9) for detecting a driving resistance, in particular a positive gradient, **characterized in that** the apparatus (9) determines an expected driving resistance ($F_r(t_0+T)$) as a function of a current driving resistance ($F_r(t_0)$), wherein the apparatus takes a current change ($dF_r/dT$) in driving resistance into account in order to determine the expected driving resistance ($F_r(t_0+T)$), and actuates the internal combustion engine (2) as a function of the expected driving resistance ($F_r(t_0+T)$).

8. Drive device according to Claim 7, **characterized in that** the apparatus (9) has at least one inclination sensor (10).

9. Drive device according to one of the preceding claims, **characterized in that** the apparatus (9) comprises means for detecting the current vehicle speed and/or the currently possible driving torque of the electric machine (3).

**Revendications**

1. Procédé pour faire fonctionner un dispositif d'entraînement (1) d'un véhicule automobile, qui comprend au moins un moteur à combustion interne (2) et au moins une machine électrique (3), une résistance de conduite, en particulier une montée, étant détectée et le moteur à combustion interne (2) étant mis en marche en fonction de ladite résistance de conduite, dans lequel le moteur à combustion interne (2) est mis en marche en fonction d'une résistance de conduite attendue ($F_r(t_0+T)$), qui est déterminée en fonction d'une résistance de conduite actuelle ($F_r(t_0)$), **caractérisé en ce que** pour déterminer la résistance de conduite attendue ($F_r(t_0+T)$), on tient compte d'une variation de résistance de conduite actuelle ($dF_r/dT$).

2. Procédé selon la revendication 1, **caractérisé en ce que** dans le cas d'un dépassement d'une valeur de seuil prédéfinissable (S) par la résistance de conduite attendue déterminée ($F_r(t_0+T)$), le moteur à combustion interne (2) est mis en marche.

3. Procédé selon l'une quelconque des revendications précédentes, **caractérisé en ce que** lors de la détermination de la résistance de conduite attendue ($F_r(t_0+T)$), au moins un paramètre est pris en compte pour une pondération de la variation de résistance de conduite actuelle ($dF_r/dT$).

4. Procédé selon l'une quelconque des revendications précédentes, **caractérisé en ce que** l'on tient compte en tant que paramètre de la vitesse du véhicule.

5. Procédé selon l'une quelconque dés revendications précédentes, **caractérisé en ce que** l'on tient compte en tant que paramètre d'une valeur temporelle prédéfinissable (T).

6. Procédé selon l'une quelconque des revendications précédentes, **caractérisé en ce que** la valeur de seuil prédéfinissable (S) est sélectionnée en fonction d'un couple d'entraînement possible actuel de la machine électrique (3).

7. Dispositif d'entraînement (1) pour un véhicule automobile, en particulier pour mettre en oeuvre le procédé selon l'une quelconque ou plusieurs des revendications précédentes, qui comprend au moins un moteur à combustion interne (2) et au moins une machine électrique (3), et qui présente un dispositif (9) pour détecter une résistance de conduite, en particulier une montée, **caractérisé en ce que** le dispositif (9) détermine, en fonction d'une résistance de conduite actuelle $F_r(t_0)$, une résistance de conduite attendue ($F_r(t_0+T)$), le dispositif tenant compte d'une variation de résistance de conduite actuelle ($dF_r/dT$) pour déterminer la résistance de conduite attendue ($F_r(t_0+T)$), et commande le moteur à combustion interne (2) en fonction de la résistance de conduite attendue ($F_r(t_0+T)$).

8. Dispositif d'entraînement selon la revendication 7, **caractérisé en ce que** le dispositif (9) présente au moins un capteur d'inclinaison (10).

9. Dispositif d'entraînement selon l'une quelconque des revendications précédentes, **caractérisé en ce que** le dispositif (9) comprend des moyens pour détecter la vitesse actuelle du véhicule et/ou le couple d'entraînement possible actuel de la machine électrique (3).

**FIG. 1**

**FIG. 2**

# FIG. 3A

# FIG. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10041789 A1
- US 5927415 A